## Europäisches Patentamt
## European Patent Office
## Office européen des brevets

(19)

(11) Veröffentlichungsnummer: **0 103 075**
**B1**

(12) **EUROPÄISCHE PATENTSCHRIFT**

(45) Veröffentlichungstag der Patentschrift:
29.04.87

(51) Int. Cl.⁴: **F 16 L 47/02**

(21) Anmeldenummer: **83105739.3**

(22) Anmeldetag: **11.06.83**

(54) **Muffe aus thermoplastischem Material zum Verbinden von Leitungselementen.**

(30) Priorität: **23.06.82 CH 3863/82**

(43) Veröffentlichungstag der Anmeldung:
**21.03.84 Patentblatt 84/12**

(45) Bekanntmachung des Hinweises auf die Patenterteilung:
**29.04.87 Patentblatt 87/18**

(84) Benannte Vertragsstaaten:
**AT BE DE FR GB IT NL SE**

(56) Entgegenhaltungen:
**EP-A-0 036 963**
**WO-A-79/01018**
**WO-A-80/02124**
**DE-A-1 479 231**
**DE-A-1 615 092**
**DE-U-1 849 053**
**DE-U-1 871 448**
**DE-U-1 885 743**

**DUBBELS "Taschenbuch für den Maschinenbau",**
**12. Auflage, 1961, Springer-Verlag, Berlin-**
**Göttingen-Heidelberg, Seite 572**

(73) Patentinhaber: **Sturm, Werner, Rütmattstrasse 9,**
**CH- 5000 Aarau (CH)**
Patentinhaber: **VON ROLL AG, CH- 4563 Gerlafingen**
**(CH)**

(72) Erfinder: **Sturm, Werner, Rütmattstrasse 9, CH-**
**5000 Aarau (CH)**

(74) Vertreter: **Meyer, Reinhard, Dipl.- Ing., c/o Dr. A.**
**R. Egli & Co. Patentanwälte Horneggstrasse 4,**
**CH- 8008 Zürich (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Muffe mit einem hülsenförmigen Muffenkörper aus einem thermoplastischen Material zum Verbinden von Leitungselementen aus demselben oder einem ähnlichen Material, wobei die zum teilweisen Schmelzen des Muffenkörpers und der Leitungselemente benötigte Schweissenergie durch Wärmeerzeugung mittels elektrischer Energie in einem im Bereich der Innenwand des Muffenkörpers angeordneten, einen Widerstandsheizdraht aufweisenden elektrischen Widerstandsheizelement erfolgt, dessen Widerstandsheizdraht aus einem Material mit einem bei einer Temperaturzunahme von 100°C um mindestens 25% höheren Temperaturkoeffizienten besteht (DE-A-1.479.231).

Zum Verbinden von Leitungselementen aus thermoplastischem Material ist es bekannt, diese durch zylinderförmige Muffen mit einem hülsenförmigen Muffenkörper aus einem thermoplastischen Material durch teilweises Aufschmelzen von Materialpartien der Leitungselemente und der Muffe zu verbinden. Unter Leitungselementen werden Rohrstücke, Formstücke, Steuerorgane, z.B. Ventile, und andere Werkstücke verstanden, die zylinderförmige, durch eine Muffenverbindung verbindbare Partien aufweisen, wobei der Muffenkörper Teil eines Rohrelements sein kann oder als separater Teil Verwendung findet. Zum teilweisen Schmelzen und Schweissen der zu verbindenden Teile wird im Bereich der Innenwand des hülsenförmigen Muffenkörpers ein elektrisches Widerstandsheizelement angeordnet und in diesem durch Zufuhr elektrischer Energie eine dosierte, zum Verbinden der Teile ausreichende Wärmemenge erzeugt. Das Widerstandsheizelement besteht meistens aus einem, in Form einer Wicklung angeordneten elektrischen Widerstandsheizdraht, wobei die Windungen der Wicklung in einem bestimmten Abstand voneinander angeordnet sind, um Kurzschlüsse zu vermeiden.

Zur Dosierung der für das Verschweissen der Teile erforderlichen Wärmemenge, mit welcher das Erreichen der für das thermoplastische Material zutreffenden Temperatur erreicht werden soll, werden Schweissgeräte verwendet, welche die der benötigten Wärmemenge proportionale elektrische Energie dem Widerstandsheizelement zuführen. Diese Schweissgeräte sind in verschiedenen Ausführungen bekannt, welche mit einer konstanten Strom-Zeitregelung oder einer konstanten Spannungs-Zeitregelung arbeiten und damit die Zuführung einer dosierten Heizenergie ermöglichen, welche zu der benötigten End- oder Verschweissungstemperatur führen soll. Es sind auch Geräte mit einer Temperaturmessstelle an der Muffe selbst bekannt sowie einfachere Geräte, die nur die Schweisszeit begrenzen. Zur Erreichung einer möglichst genauen Endtemperatur sind auch Geräte bekannt, deren Regelung die Umgebungstemperatur als Störgrösse mitberücksichtigt.

Den bekannten Schweissgeräten haftet der Nachteil an, dass sie über die sich tatsächlich in der Muffe einstellende Endtemperatur keine genaue Kontrolle ausüben. Davon ist zwar das Gerät mit dem Temperaturfühler auszunehmen, jedoch ist es in der Praxis schwierig zu handhaben. Aus diesem Grunde werden in der Praxis nur Geräte verwendet, welche eine direkte Messung der Endtemperatur der Muffe nicht ermöglichen, sondern diese indirekt durch Dosierung der Schweissenergie einzuhalten versuchen. Damit die notwendige Wärmemenge und die verlangte Endtemperatur mit Sicherheit erreicht werden, führt dies dazu, dass die zugeführte elektrische Energie zu hoch gewählt wird, dass bei Störungen in dem Schweissgerät, z.B. durch Hängenbleiben des Schaltrelais, Nichtfunktionieren des Zeitkreises oder zu hohe Spannungs- bzw. Stromwerte, der Widerstandsheizdraht eine Temperatur erreicht, durch welche das thermoplastische Material der zu verbindenden Teile beschädigt oder sogar entflammt werden kann.

Die für das Verbinden der Teile verwendete Muffe mit einem hülsenförmigen Muffenkörper und dem darin eingelegten Widerstandsheizdraht scheint ein verhältnismässig einfaches Element zu sein, wenn auch das Einlegen des Widerstandsheizdrahts mit Sorgfalt erfolgen muss, damit keine Windungsschlüsse auftreten. Damit eine gute Verbindung der zu verschweissenden Teile erreicht wird, wird dem thermoplastischen Muffenkörper eine Schrumpfreserve erteilt, welche beim Schweissvorgang ausgelöst wird, und ein sattes Anliegen des Muffenkörpers auf den zu verbindenden Teilen zur Folge hat. Der Widerstandsheizdraht dagegen wird erwärmt und dehnt sich entgegen der Schrumpfbewegung des Muffenkörpers aus. Diese beiden gegenläufigen Bewegungen können ein Ausknicken des Widerstandsheizdrahts und damit den Kurzschluss einer oder mehren Windungen der Wicklung bewirken, wodurch ebenfalls das Material beschädigt oder sich entflammen kann. Zwar kann man durch Ummanteln des Widerstandsheizdrahts bei der Herstellung der Muffe erreichen, dass ein genügender Abstand der im Muffenkörper eingebetteten Windungen des Widerstandsheizdrahts mit Sicherheit eingehalten werden kann, jedoch schliesst dies die Möglichkeit von Kurzschlüssen der Windungen nach dem Schmelzen des den Widerstandsheizdraht umgebenden Materials beim Schweissen nicht aus.

Die erwähnten Probleme führen dazu, dass die geforderten sicherheitstechnischen Voraussetzungen nur durch zusätzliche Hilfsmittel erreicht werden können, z.B. durch Arbeiten mit zwei unabhängigen Zeitkreisen, durch eine Anzeige, ob die Regelung zu hoch oder zu tief war oder durch Verunmöglichung des Einschaltens des Schweissgeräts, falls die zur Regelung verwendeten Stellglieder nicht funktionieren. Dies bedeutet jedoch einen zusätzlichen Aufwand, der vor allem die Schweissgeräte verteuert.

Es ist deshalb Aufgabe der Erfindung, eine Muffe der eingangs beschriebenen Art so auszugestalten, dass einerseits ein Überhitzen oder Entflammen des Materials der Muffe verunmöglicht und andererseits ein Windungsschluss während des Schweissvorgangs mit Sicherheit vermieden wird.

Diese Aufgabe wird gemäss der Erfindung durch die kennzeichnenden Merkmale des Anspruchs 1 gelöst. Dadurch wird erreicht, dass die geforderten sicherheitstechnischen Voraussetzungen erfüllt werden können, ohne dass zusätzliche Mittel oder Vorrichtungen, z.B. an den Schweissgeräten, vorgesehen werden müssen.

Die Erfindung ist in der Zeichnung in zwei Ausführungsbeispielen dargestellt und nachfolgend beschrieben.

Es zeigen:

Fig. 1 einen Längsschnitt der teilweise dargestellten Muffe zum Verbinden von zwei teilweise dargestellten Rohrelementen,

Fig. 2 einen Längsschnitt durch eine teilweise dargestellte zweite Ausführungsform einer Muffe und

Fig. 3 eine vergrösserte Aufstellung des Ausschnitts III in Fig. 2.

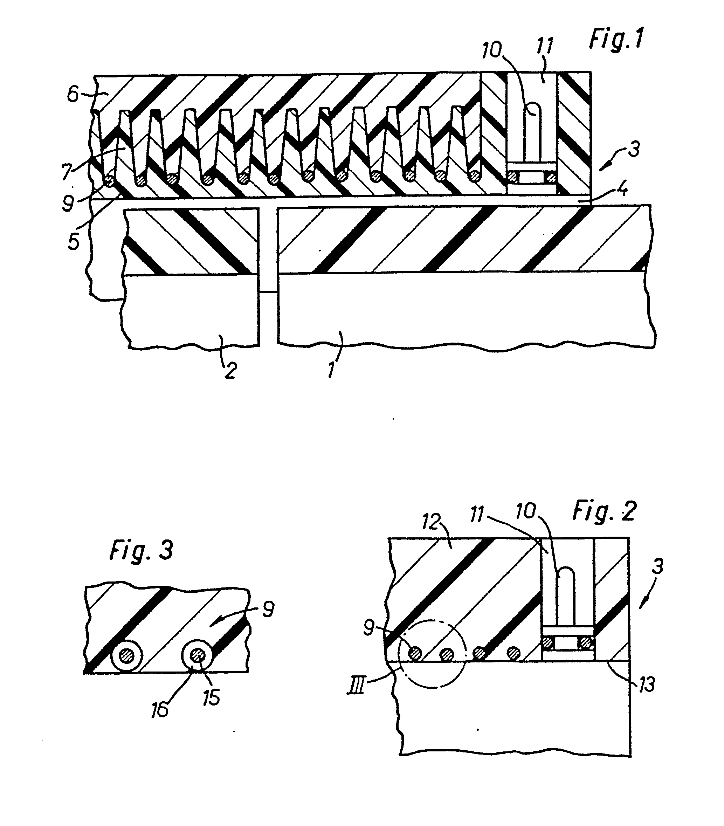

Anhand von Fig. 1 wird die Verbindung zweier rohrförmiger Teile 1, 2 (nur teilweise dargestellt) aus thermoplastischem Material durch eine Muffe 3 aus thermoplastischem Material (nur teilweise dargestellt) erläutert. Die Teile 1, 2 können zu Rohrelementen gehören, z.B. Rohrstücken o.dgl. Über die Teile 1, 2 wird die Muffe 3 geschoben, die gegenüber den Teilen 1, 2 ein gewisses Spiel 4 aufweist. Die Muffe 3 weist einen Muffeninnenteil 5 und einen Muffenaussenteil 6 auf, wobei die beiden Teile 5, 6 kammartig ineinandergreifen. Der Muffeninnenteil weist einen schraubenförmig verlaufenden, ringscheibenförmigen Steg 7 auf, in dessen Gängen ein Widerstandsheizdraht 9 schraubenförmig verlegt ist und eine Wicklung bildet. Die Enden des Widerstandsdrahts 9 sind an Kontakten 10 befestigt, die in einer, an den Enden des Muffeninnenteils 5 angeordneten Bohrung 11 gelagert sind. Mit den Kontakten 10 werden entsprechende Leitungen eines Schweissgeräts angeschlossen, durch welche der Widerstandsheizdraht mit elektrischer Energie gespeist wird.

In Fig. 1 sind die Teile vor ihrer Verbindung dargestellt. Wird durch das Schweissgerät dem Widerstandsheizdraht 9 elektrische Energie zugeführt, so wird in demselben Wärme erzeugt, die zu einer teilweisen Erweichung des aus den Teilen 5, 6 gebildeten Muffenkörpers führt. Da dem Muffenkörper bei seiner Herstellung eine Schrumpfreserve, z.B. durch Aufweiten, erteilt wird, wird diese bei der Erwärmung des Muffenkörpers frei und führt zu einem Schrumpfen des Muffenkörpers, wodurch der Spalt 4 aufgehoben wird.

Die in Fig. 2 teilweise dargestellte Muffe 3 weist einen einteiligen Muffenkörper 12 auf, der an seinen beiden Enden wie bei der Muffe nach Fig. 1 die Öffnung 11 zur Aufnahme des Kontaktes 10 aufweist. Der Widerstandsheizdraht ist in der Innenwand 13 des Muffenkörpers 12 eingebettet. Die Einbettung des Widerstandsheizdrahtes 9 in den Muffenkörper 12 kann in verschiedener Weise erfolgen, z.B. durch Umspritzen des in einer Wicklung auf einem Dorn aufgewickelten Widerstandsheizdrahts 9 oder durch Ummanteln des Widerstandsheizdrahts 9 mit demselben oder ähnlichem Material wie dasjenige des Muffenkörpers 12 und Einlegen dieses Drahts an die Innenwand 13 des Muffenkörpers 12 mit anschliessendem Verschmelzen des Ummantelungsmaterials mit dem Material des Muffenkörpers 12.

Bei den beschriebenen Muffen 3 nach Fig. 1 und 2 geht bei der Wärmeerzeugung im Widerstandsheizdraht 9 das denselben umgebende thermoplastische Material in einen schweissfähigen Zustand über. Damit tritt die eingangs beschriebene Gefahr von Windungsschlüssen auf, die zur Zerstörung und auch zum Entflammen des thermoplastischen Materials sowohl der Teile 1, 2 als auch des Muffenkörpers 6, 7 bzw. 12 führen können. Diese Gefahr wird in der in Fig. 3 dargestellten Weise vermieden.

In Fig. 3 besteht der Widerstandsheizdraht 9 aus dem eigentlichen Draht 15 und einer Ummantelung 16. Im Gegensatz zur vorstehend beschriebenen Ummantelung besteht die Ummantelung 16 aus einem artfremden Material, das temperaturbeständig ist, d.h. bei den auftretenden Schweisstemperaturen unverändert bleibt. Bei den zur Verwendung gelangenden Ummatelungen 16 liegt der Schmelzpunkt über der für die Schweissverbindung der Teile 1, 2 der Muffe 3 erforderlichen Schweisstemperatur. Hierzu eignen sich vernetzte Kunststoffmaterialien, wie sie zur Herstellung von hochtemperaturfesten Drähten verwendet werden, z.B. vernetztes Polyäthylen und Polyolefin. Auch die Verwendung von mit Silikonen isolierten Heizdrähten ist möglich. Durch die Wärmebeständige Ummantelung 16 erweicht das thermoplastische Material des Muffenkörpers, bevor die den Draht 15 umgebende Ummantelung abschmilzt. Lackisolierte oder oxydierte Widerstandsheizdrähte weisen eine ungenügende Isolation auf und sind deshalb für die beschriebene Anwendung nicht geeignet.

Den geforderten sicherheitstechnischen Voraussetzungen würde die Verwendung von temperaturbeständigen Ummantelungen allein

nicht genügen, wenn die bei den bekannten Schweissmuffen verwendeten Widerstandsheizdrähte z.B. aus nickellegiertem Material, mit einer temperaturbeständigen Ummantelung 16 kombiniert werden. Da die bisher verwendeten Widerstandsheizdrähte einen geringen Temperaturkoeffizienten aufweisen, kann bei Störungen am Schweissgerät, z.B. durch Versagen eines zur Regelung gehörenden Teils, das thermoplastische Material der Teile 1, 2 und/oder der Muffe 3 beschädigt und sogar entflammt werden.

Dieser Mangel kann erfindungsgemäss dadurch behoben werden, dass als Drahtmaterial für den Widerstandsheizdraht 9 ein Material mit hohem Temperaturkoeffizienten verwendet wird. Hierzu eignen sich Heizdrähte aus z.B. Eisen, Nickel, Kupfer oder Legierungen dieser Materialien, durch deren hohen Temperaturkoeffizient erreicht wird, dass beim Anlegen einer vorbekannten elektrischen Spannung an die Kontakte 10 der Muffe 3 die Heizleistung in Funktion der Temperaturzunahme in der Muffe 3 abnimmt. Wird z.B. bei einer Muffe 3 aus Polyäthylen ein Eisendraht als Widerstandsheizdraht 9 verwendet, so verkleinert sich die Heizleistung um die Hälfte, wenn die Temperatur von 20° C auf 228° C ansteigt. Die Heizleistung wird nun so gewählt, dass sich eine Begrenzung in der Temperaturzunahme über den sich ständig vergrössernden Widerstand des Widerstandsheizdrahts 9 einstellt; dabei bleibt die Ummantelung 16 vollständig intakt und eine Berührung mit einem elektrischen Leiter ist ausgeschlossen.

Durch die Verwendung von Widerstandsheizdrähten mit hohem Temperaturkoeffizienten wird in überraschend einfacher Weise den sicherheitstechnischen Voraussetzungen entsprochen. Durch die Verwendung von Muffen 3 mit solchen Widerstandsheizdrähten wird der Schweissvorgang in keiner Weise ungünstig beeinflusst. Vielmehr entspricht die zunehmende Verringerung der Heizleistung dem Schweissvorgang, bei dessen Beginn, d.h. beim Aufschmelzen des thermoplastischen Materials eine grosse Heizleistung benötigt wird, während nach erfolgtem Aufschmelzen nur noch die Schweisstemperatur aufrecht gehalten werden muss.

Durch die Verwendung eines Widerstandsheizdrahts mit hohem Temperaturkoeffizienten kombiniert mit einer temperaturbeständigen Drahtummantelung können Muffen hergestellt werden, die den geforderten sicherheitstechnischen Voraussetzungen genügen und deshalb zu Recht als Sicherheits-Schweissmuffen bezeichnet werden dürfen. Wesentlich ist jedoch, dass die Ummantelung 16 eine genügende Schichtstärke aufweist, z.B. 0,4 mm bei einem Drahtdurchmesser von 0,6 mm, d.h. die Schichtstärke beträgt mehr als 65% des Drahtdurchmessers.

Durch die Ummantelung ist der Berührungsschutz auch dann gewährleistet, wenn der Draht unmittelbar an der Innenwand des Muffenkörpers oder in Rillen der Innenwand liegt.

Die Ummantelung gewährt auch einen guten Korrosionsschutz, doch kann zusätzlich der Draht, z.B. ein Eisendraht, mit einem Korrosionsschutz versehen sein.

Wesentlich ist, dass auch im Berührungsfall, d.h. in erschmolzenem Zustand der Muffe die Aussentemepratur an der Isolation der Heizdrähte nur so hoch werden kann, dass die Isolation nicht zerstört wird. Dies wird dadurch erreicht, dass auch die in diesem Fall eintretende grössere Erwärmung der Heizdrähte sich eine Verringerung der Heizleistung einstellt, die für eine Zerstörung der Isolierschicht nicht mehr ausreicht.

## Patentansprüche

1. Muffe mit einem hülsenförmigen Muffenkörper (5, 6; 12) aus einem thermoplastischen Material zum Verbinden von Leitungselementen (1, 2) aus demselben oder einem ähnlichen Material, wobei die zum teilweisen Schmelzen des Muffenkörpers und der Leitungselemente benötigte Schweissenergie durch Wärmeerzeugung mittels elektrischer Energie in einem im Bereich der Innenwand des Muffenkörpers angeordneten, einen Widerstandsheizdraht aufweisenden elektrischen Widerstandsheizelement erfolgt, dessen Widerstandsheizdraht (9, 15) aus einem Material mit einem bei einer Temperaturzunahme von 100° C um mindestens 25 % höheren Temperaturkoefizienten besteht, dadurch gekennzeichnet, dass der Widerstandsheizdraht (9) von einer Ummantelung (16) umgeben ist, deren Material von dem Material des Muffenkörpers (5, 6, 12) abweicht und deren Schichtstärke bei Durchmessern des Widerstandsheizdrahtes (15) bis 1 mm mindestens 40 %, vorzugsweise 60 %, und bei grösseren Durchmessern mindestens 20 % beträgt.

2. Muffe nach Anspruch 1, dadurch gekennzeichnet, dass die Ummantelung (16) des Widerstandsheizdrahtes (9) z.B. aus Silikonen oder vernetztem Polyäthylen und Polyolefinen besteht, sowie eine über der für das Schweissen der Leitungselemente (1, 2) erforderlichen Temperatur liegende Erweichungstemperatur aufweist und beim Verbinden der Leitungselemente unverändert innerhalb des Muffenkörpers bleibt.

3. Muffe nach Anspruch 1 oder 2, dadurch gekennzeichnet, dass der in dem Muffenkörper (5, 6; 12) verlegte ummantelte Widerstandsheizdraht (9) mit Abstand angeordnete Windungen aufweist, wobei sich die Ummantelungen (16) der einzelnen Windungen nicht berühren.

4. Muffe nach einem der Ansprüche 1 bis 3, dadurch gekennzeichnet, dass die Ummantelung der Windungen der Heizwicklung mit der Innenwandung bündig ist.

## Claims

1. Plastic socket of thermoplastic material for the connection of conduit elements (1, 2) of the same or a similar material by partial melting of the socket body (5, 6; 12) and heat sealing of the conduit elements through heat production using electrical energy in an area of the inner wall of the socket body by means of a resistance heat wire incorporated in an electrical resistance heating element the wire of which (9, 15) consisting of a material with an at least 25% higher temperature coefficient in the case of an increase in temperature of 100° C, characterized in that the resistance wire (9) is enclosed in a jacket (16) the material of which deviatas from that of the socket body, and that the thickness of the laver thereof for wire (15) diameters up to 1 mm is at least 40%, preferably 60 %, and is at least 20 % for larger diameters.

2. Pocket according to claim 1, characterized in that the jacket (16) of the wire (9) consists e.g. of silicones, cross-linked polyethylenes or polyolefines, has a softening temperature above that necessary for the melting and heat sealing of the conduit elements (1, 2), and remains unchanged within the socket body when conduit elements are connected.

3. Socket according to claim 1 or 2, characterized in that the wire (9) placed in a jacket inside socket body (5, 6; 12) has spaced windings, and that the jackets (16) of the different windings do not touch each other.

4. Socket according to one of the claims 1 to 3, characterized in that the jacket of each winding of the heat coiling is flush with the inner wall.

## Revendications

1. Manchon comportant un corps de manchon (5, 6, 12) en forme de fourreau, en matière thermoplastique, destiné à l'assemblage d'éléments de conduite (1, 2) de même matière ou d'une matière similaire, l'énergie de soudage nécessaire à la fusion partielle du corps de manchon et des éléments de conduite étant fournie par production de chaleur au moyen d'énergie électrique dans un élément électrique chauffant par résistance présentant un fil chauffant par résistance, disposé dans la zone de la paroi intérieure du corps du manchon, le fil chauffant par résistance (9, 15) étant fait d'une matière présentant, pour une hausse de température de 100° C, un coefficient de température supérieur de 25% au minimum, caractérisé en ce que le fil chauffant par résistance (9) est entouré d'une gaine (16) dont la matière est différente de la matière du corps du manchon (5, 6, 12) et dont l'épaisseur pour des diamètres de fils chauffants par résistance (15) allant jusqu'à 1 mm, est au moins égale à 40%, de préférence 60% et pour les grands diamètres, d'au moins 20%.

2. Manchon selon la revendication 1, caractérisé en ce que la gaine (16) du fil chauffant par résistance (9) est par exemple en silicone ou en polyéthylène réticulé et polyoléfines, et présente une température de ramollissement supérieure à la température nécessaire pour le soudage des éléments de conduite (1, 2), et reste inchangée à l'intérieur du corps du manchon, pendant l'assemblage des éléments de conduite.

3. Manchon selon la revendication 1 ou 2, caractérisé en ce que le fil chauffant par résistance (9) gainé, posé dans le corps de manchon (5, 6, 12), présente des spires espacées, les gaines (16) des différentes spires ne se touchant pas.

4. Manchon selon l'une des revendications 1 à 3, caractérisé en ce que la gaine des spires de l'enroulement de chauffage est jointive avec la paroi interne.

**Fig.1**

10  11

6

7

9

5

3

4

2  1

**Fig. 2**

12  11  10

9

III

3

13

**Fig. 3**

9

16  15